# EUROPÄISCHE PATENTSCHRIFT

(11) **EP 0 600 058 B1**
(45) Veröffentlichungstag und Bekanntmachung des Hinweises auf die Patenterteilung: **18.12.1996**
(21) Anmeldenummer: 93912561.3
(22) Anmeldetag: 05.06.1993
(51) Int. Cl.: D01H 4/08

(54) **VORRICHTUNG ZUM ZUFÜHREN VON FASERN ZU DER FASERSAMMELRILLE EINES OFFENEND-SPINNROTORS**
DEVICE FOR SUPPLYING FIBERS TO THE FIBER COLLECTING GROOVE OF AN OPEN END SPINNING ROTOR
DISPOSITIF PERMETTANT D'AMENER DES FIBRES JUSQU'A LA RAINURE COLLECTRICE DE FIBRES D'UN ROTOR DE FILAGE A FIBRES LIBEREES

(30) Priorität: 11.06.1992 CS 1770/92
(43) Veröffentlichungstag der Anmeldung: 08.06.1994
(73) Patentinhaber: Rieter Ingolstadt Spinnereimaschinenbau AG, 85055 Ingolstadt (DE)
(72) Erfinder: DIDEK, Stanislav, 562 06 Usti nad Orlici (CZ); BLAZEK, Petr, 565 01 Chocen (CZ); STEJSKAL, Alois, 562 01 Usti nad Orlici (CZ)
(86) Internationale Anmeldenummer: DE9300484
(87) Internationale Veröffentlichungsnummer: WO9325737

(56) Entgegenhaltungen:
- WO-A-93/12279
- DE-A- 2 319 428
- DE-A- 3 935 419
- FR-A- 2 202 961

## Beschreibung

Die Erfindung betrifft eine Vorrichtung zum Zuführen von Fasern zu der Fasersammelrille eines Offenend-Spinnrotors, mit einem koaxial in den Spinnrotor hineinragenden, feststehenden Faserführungskörper, der eine als Faserführungsfläche ausgebildete Innenumfangsfläche aufweist, in welche tangential die Mündung eines Faserspeisekanals einmündet und übergeht.

Bei einer bekannten Vorrichtung dieser Art (DE-OS 2.319.428) ist ein kanalförmiger Faserführungskörper vorgesehen, längs dessen Umfangswand die Fasern spiralförmig dem Spinnrotor zugeführt werden. Dieser Kanal hat einen zylindrischen Querschnitt oder aber einen den wesentlichen Teil seiner Länge ausmachenden, sich in Richtung zum Spinnrotor verjüngenden Querschnitt. Ein solcher kanalförmiger Faserführungskörper ist nicht nur sehr platzaufwendig, sondern beeinflußt die Faserzuführung in den Spinnrotor keinesfalls positiv. Es hat sich beispielsweise gezeigt, daß die Fasern im kanalförmigen Faserführungskörper hängenbleiben und sogar zu Verstopfungen führen. Die bekannte Vorrichtung hat deshalb keine Einführung in der Praxis finden können.

In der WO 93/12279, die nicht vorveröffentlicht wurde (Priorität 18.12.91, Veröffentlichungsdatum 24.6.93) ist eine grundlegend andersartige Offenend-Spinnvorrichtung beschrieben, bei der die von einem Faserspeisekanal zugeführten Fasern auf eine Faserführungsfläche aufgespeist werden. Der Faserspeisekanal endet dabei derart, daß seine Mündung der Wand der Faserführungsfläche gegenüberliegt, so daß die Fasern nach dem Austritt aus dem Faserspeisekanal frei fliegend den Abstand zur Faserführungsfläche überbrücken und auf diese aufprallen. Durch eine aufwendige, besondere Luftführung am Rotorrand soll eine gute Faserablage im Rotor erfolgen. Aus der DE-A-3.935.419 ist eine ähnliche Vorrichtung bekannt, wobei zusätzlich durch ein zweites Saugmittel die Luftführung günstig ausgestaltet sein soll. Im übrigen wird in beiden Veröffentlichungen vorgeschlagen, zusätzlich der Faserführungsfläche eine Drehbewegung zu erteilen, was einen großen Aufwand an Platz bedeutet und die Vorrichtung kompliziert macht.

Aufgabe der Erfindung ist es daher, eine gattungsgemäße Vorrichtung zu schaffen, die einerseits einfach und platzsparend ist und andererseits einen störungsfreien Spinnbetrieb sowie die Erzeugung von Garnen hoher Qualität ermöglicht.

Die Aufgabe wird erfindungsgemäß durch die Merkmale des Patentanspruchs 1 gelöst. Der Faserführungskörper ist hierbei so klein und kompakt, daß er im Rotordeckel Platz findet. Der Erfindungsgegenstand gewährleistet ferner einen ungestörten Fasertransport in den Spinnrotor, da durch seine sich erweiternde Innenumfangsfläche, die die Fasern transportierende Luft und damit auch die Fasern selbst eine Bewegungskomponente in Richtung Spinnrotor erhalten. Ein Hängenbleiben der Fasern aufgrund der Fliehkraft wird hierdurch ausgeschlossen.

Um eine kostengünstige Fertigung zu erzielen, bildet der Faserführungskörper vorteilhafterweise einen integrierten Bestandteil des Rotordeckels.

Gemäß einer einfach herzustellenden Ausbildung des Erfindungsgegenstandes erweitert sich die Innenumfangsfläche des Faserführungskörpers kegelförmig in Richtung Spinnrotor.

Vorzugsweise nimmt der Divergenzwinkel von der Mündung des Faserspeisekanals in Richtung zum Spinnrotor zu. Auf diese Weise wird dem Reibungseffekt, den die Innenumfangsfläche des Faserführungskörpers auf die Fasern ausübt, entgegengewirkt, so daß auch bei größerem Abstand der Mündung des Faserspeisekanals vom Spinnrotor ein Hängenbleiben von Fasern am Faserführungskörper sicher vermieden wird.

Gemäß einer vorteilhaften Ausbildung der erfindungsgemäßen Vorrichtung erfolgt die Vergrößerung des Divergenzwinkels kontinuierlich, wobei vorzugsweise die Innenumfangsfläche des Faserführungskörpers gleichförmig konvex gewölbt ist

Einer weiteren vorteilhaften Ausbildung des Erfindungsgegenstandes gemäß erfolgt die Zunahme des Divergenzwinkels diskontinuierlich, d.h. in Stufen. Dabei ist vorzugsweise die Innenumfangsfläche des Faserführungskörpers in axialer Richtung aus mindestens zwei Längenabschnitten zusammmengesetzt, die unterschiedliche Divergenzwinkel aufweisen. Es hat sich als vorteilhaft erwiesen, wenn der Längenabschnitt, in welchen der Faserspeisekanal mündet, als Kegelfläche ausgebildet ist. Auch der dem Spinnrotor zugewandte Längenabschnitt des Faserführungskörpers kann dabei als Kegelfläche ausgebildet sein.

Gemäß einer weiteren vorteilhaften Ausbildung des Erfindungsgegenstandes ist zwischen zwei kegelförmigen Längenabschnitten der Innenumfangsfläche des Faserführungskörpers ein weiterer, konvex gekrümmter Längenabschnitt vorgesehen.

Um bei unveränderten Raumverhältnissen zwischen einer Auflöse- und Zuführeinrichtung und dem Spinnrotor auf einfache Weise an verschiedene wahlweise zum Einsatz kommende Spinnrotoren zu ermöglichen, kann in vorteilhafter Ausgestaltung des Erfindungsgegenstandes vorgesehen werden, daß der dem Spinnrotor zugewandte Längenabschnitt des Faserführungskörpers auswechselbar ist.

Für eine besonders sichere Faserübergabe an die Gleitwand des Spinnrotors ist erfindungsgemäß zweckmäßigerweise vorgesehen, daß der Faserführungskörper in den Spinnrotor hineinragt.

Der Begriff "Kegel" bzw. "kegelförmig" soll im Sinne der Erfindung nicht nur den mathematisch/geometrischen Begriff eines Kegels selber, sondern auch Kegelstümpfe und andere kegelartige Formen umfassen.

Durch die erfindungsgemäße Gestaltung des Faserführungskörpers wird nicht nur ein bedeutender technologischer Erfolg bei der Zuführung der Fasern in den Spinnrotor und damit eine Verbesserung der Garnwerte erreicht, sondern die Spinnvorrichtung kann kampakt gebaut sein. Es hat sich gezeigt, daß die Innenumfangsfläche in axialer Richtung nicht sehr lang ausgebildet zu sein braucht. Der Abstand der Mündung des Faserspeisekanals vom offenen, in den Spinnrotor hineinragenden Rand des Faserführungskörpers braucht lediglich so groß zu sein, daß die Fasern sich in der Luftströmung sammeln können, die längs der Innenumfangsfläche spiralförmig dem Spinnrotor zugeführt wird, so daß sie den Spinnrotor auf einer durch den Rand des Faserführungskörpers festgelegten Höhenlinie erreichen. Auf diese Weise werden gute Garnwerte in bezug auf Gleichmäßigkeit, Festigkeit und Elastizität erreicht. Der Erfindungsgegenstand kann auf einfache Weise sogar in allen gängigen Rotorspinnvorrichtungen auch nachgerüstet werden, wozu in der Regel ein Austausch des Rotordeckels genügt.

Ausführungsbeispiele des Erfindungsgegenstandes werden nachstehend mit Hilfe von Zeichnungen näher erläutert. Es zeigen:
- Fig. 1: im Querschnitt eine Offenend-Spinnvorrichtung mit einem erfindungsgemäß ausgebildeten Rotordeckel mit integriertem Faserführungskörper; und
- Fig. 2a bis 2d: in schematischer Darstellung verschiedene erfindungsgemäße Formen der Innenumfangsfläche des in den Rotordeckel integrierten Faserführungskörpers.

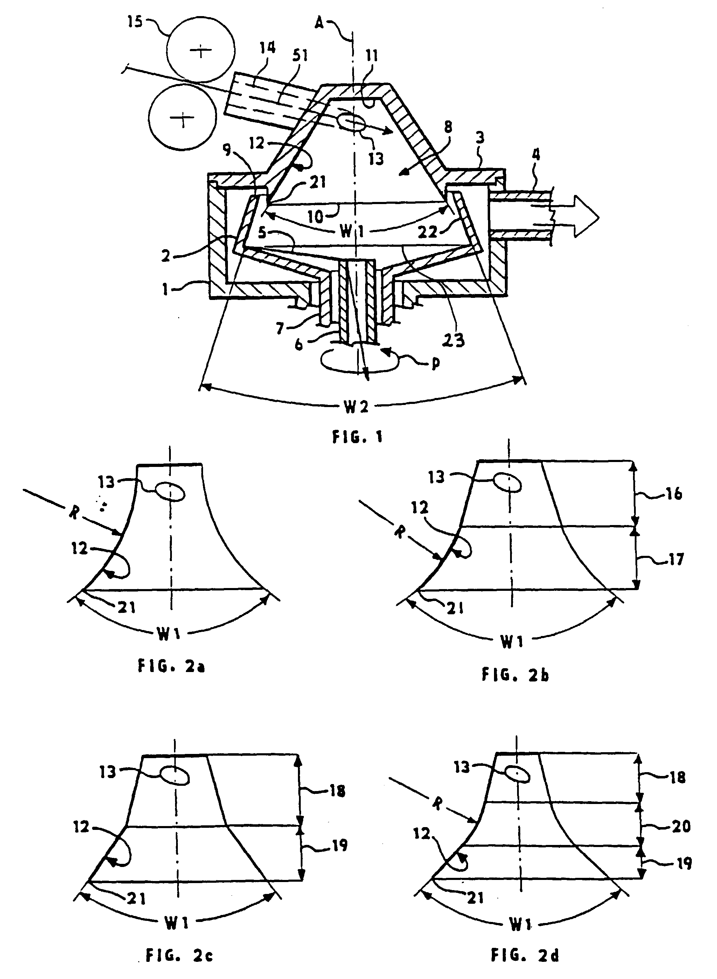

Fig. 1 zeigt den wesentlichen Teil einer üblichen Offenend-Rotorspinnvorrichtung, wobei lediglich die für das Verständnis der Erfindung erforderlichen Teile hiervon dargestellt sind.

Die Rotorspinnvorrichtung, von welcher in einer Spinnmaschine üblicherweise eine Vielzahl nebeneinander angeordnet sind, weist ein Gehäuse 1 auf, in welchem mittels eines Schaftes 7 in nicht gezeigter Weise ein in Richtung des Pfeiles P antreibbarer Spinnrotor 2 drehbar gelagert ist. Der Spinnrotor 2 weist in üblicher Weise eine sich von einem offenen Rand 9 zu einer Fasersammelrille 23 erweiternde Gleitwand 22 auf.

Das Gehäuse 1 besitzt einen die offene Seite des Spinnrotors 2 abdeckenden Rotordeckel 3 und ist zur Erzeugung des Spinnunterdruckes mit seinem Innenraum durch eine Luftleitung 4 mit einer nicht gezeigten Unterdruckquelle verbunden.

Zum Abführen des Fadens 5 aus dem Spinnrotor 2 dient ein Fadenabzugsrohr 6, das beim gezeigten Ausführungsbeispiel in dem als Hohlschaft ausgebildeten Schaft 7 des Spinnrotors 2 angeordnet ist und bis in den Spinnrotor 2 hineinragt.

Im Rotordeckel 3 ist auf dessen dem Spinnrotor 2 zugewandten Seite ein Faserführungskörper 8 koaxial zum Spinnrotor 2 angeordnet, so daß die geometrische Achse A des Faserführungskörpers 8 mit der Rotationsachse des Spinnrotors 2 zusammenfällt. Dieser Faserführungskörper 8 ist integrierter Bestandteil des Rotordeckels 3 und ragt in den Spinnrotor 2 hinein, wobei er mit seiner Austrittsöffnung 10 innerhalb des offenen Randes 9 des Spinnrotors 2 endet. Dabei nähert sich der Durchmesser des Faserführungskörpers 8 dem Durchmesser des offenen Randes 9 des Spinnrotors 2. An seinem dem Spinnrotor 2 abgewandten Ende ist der Faserführungskörper 8 durch ein Stirnwand 11 geschlossen.

Der Faserführungskörper 8 besitzt eine Innenumfangsfläche 12, die als Faserführungsfläche dient und sich von der Stirnwand 11 des Fadenführungskörpers 8 bis zur Austrittsöffnung 10 erstreckt.

In der Innenumfangsfläche 12 des Faserführungskörpers 8 befindet sich im Abstand von dessen Austrittsöffnung 10 die Mündung 13 eines Faserspeisekanals 14, der an einer Auflöse- und Zuführeinrichtung 15 beginnt und tangential in die Innenumfangsfläche 12 übergeht. Dieser Faserspeisekanal 14 und seine Mündung 13 sowie der Faserführungskörper 8 sind so ausgebildet, daß aufgrund des an der Luftleitung 4 anliegenden Unterdruckes eine tangential in den Faserführungskörper 8 in Richtung der Umlaufrichtung des Spinnrotors 2 eingeführte Luftströmung entsteht, welche die Fasern 51 mitnimmt und der Innenumfangsfläche 12 tangential zuführt. Dieser Luftstrom verläßt den Spinnrotor 2 wieder durch den Spalt zwischen dem offenen Rand 9 des Spinnrotors 2 und dem Faserführungskörper 8.

Wie Fig. 1 zeigt, erweitert sich die Innenumfangsfläche 12 in ihrer Gesamtheit von der Stirnwand 11 bis zur Austrittsöffnung 10, d.h. die Innenumfangsfläche 12 schließt somit einen Divergenzwinkel W1 ein. Die spezielle Form der Innenumfangsfläche 12 kann dabei unterschiedlich sein und hängt von den Spinnbedingungen, d.h. von verschiedenen Faktoren wie Rotordrehzahl, Steuerung der Faserzuführgeschwindigkeit und ähnlichem, ab. So erweitert sich diese Fläche 12 gemäß Figur 1 kegel- bzw. kegelstumpfförmig. Sie kann z.B. aber auch kontinuierlich gekrümmt sein, wie in Fig. 2a dargestellt (siehe Krümmungsradius R), oder sie kann aus einem den Bereich der Mündung 13 umfassenden kegelförmigen (bzw. kegelstumpfförmigen) Längenabschnitt 16 und aus einem kontinuierlich gekrümmten Längenabschnitt 17 bestehen, der an diesen ersten kegelkörmigen Längenabschnitt 16 anschließt und sich bis zur Austrittsöffnung 10 erstreckt (Fig. 2b). Alternativ kann die Innenumfangsfläche 12 auch aus mindestens zwei aneinander anschließenden kegel- bzw. kegelstumpfförmigen Längenabschnitten 18, 19 bestehen, wie in Fig. 2c dargestellt. Gemäß einer weiteren möglichen Formgebung ist zwischen mindestens zwei solchen kegelförmigen Längenabschnitten 18, 19 ein gekrümmter Längenabschnitt 20 vorgesehen (Fig. 2d). Jede dieser Innenumfangsflächen 12 nach Fig. 1 oder einer der Fig. 2a bis 2d divergiert in Richtung zum Spinnrotor 2. Vorteilhafterweise besitzt diese Innenumfangsfläche 12 mindestens an der Stelle 21, an welcher im Betrieb der Vorrichtung die Fasern 51 die Innenumfangsfläche 12 verlassen, einen Divergenzwinkel W1, der größer als der Divergenzwinkel W2 der anschließenden Gleitwand 22 des Spinnrotors 2 ist.

Prinzipiell wird mit jeder der gezeigten Formen der Innenumfangsfläche 12 der Vorteil erzielt, daß ein sicherer Fasertransport von der Mündung 13 des Faserspeisekanals 14 bis auf die Gleitwand 22 des Spinnrotors 2 gewährleistet ist. Durch die sich erweiternde Form der Innenumfangsfläche 12 des Spinnrotors 2 wird in jedem Fall erreicht, daß die in Umfangsrichtung der Innenumfangsfläche 12 dem Spinnrotor 2 zugeführte Luft mit den Fasern 51 immer mehr beschleunigt wird, so daß die sich ergebende Resultierende die Fasern 51 unter Überwindung der Reibung zur Austrittsöffnung 10 des Faserführungskörpers 8 befördert.

Die Geschwindigkeit der die Einzelfasern 51 fördernden Luft und ihre Beschleunigung hängen nicht nur von der Konizität, d.h. dem Divergenzwinkel W1 des Faserführungskörpers 8, ab, sondern im wesentlichen auch von der Geschwindigkeit, mit welcher die Luft den Spinnrotor 2 wieder verläßt. Bei einer externen Unterdruckquelle, die über die Luftleitung 4 die Luft aus dem Spinnrotor 2 absaugt, ist diese somit entsprechend zu dimensionieren oder zu steuern.

Die Kegel- bzw. Kegelstumpfform der Innenumfangsfläche 12 ist besonders einfach herzustellen und wird in der Regel auch allen Anforderungen gerecht. Die Länge der Innenumfangsfläche 12 in axialer Richtung des Faserführungskörpers 8 kann unterschiedlich sein und hängt im wesentlichen von der Geschwindigkeit der die Einzelfasern 51 fördernden Luftströmung und dem Divergenzwinkel W1 ab. Je geringer die Luftgeschwindigkeit und je kleiner der Divergenzwinkel W1 ist, desto geringer muß diese Länge sein. Ist jedoch der Abstand der Mündung 13 des Faserspeisekanals 14 von der Austrittsöffnung 10 des Faserführungskörpers 8 größer, so ist es besonders vorteilhaft, wenn die aufgrund des längeren Weges auftretende größere Reibung, die sich auf die Fasern 51 auswirkt, dadurch kompensiert wird, daß der Divergenzwinkel W1 von der Mündung 13 des Faserspeisekanals 14 in Richtung zum Spinnrotor 2 zunimmt und/oder die Luftgeschwindigkeit erhöht wird. Die Vergößerung des Divergenzwinkels W1 kann dabei kontinuierlich in gleichförmiger oder ungleichförmiger Weise erfolgen. So ist, wie bereits erwähnt, gemäß Fig. 2a vorgesehen, daß die Innenumfangsfläche 12 des Faserführungskörpers 8 gleichförmig konvex gewölbt ist.

Gemäß den Fig. 2b bis 2d erfolgt die Vergrößerung des Divergenzwinkels diskontinuierlich. Gemäß den Fig. 2b und 2c sind dabei jeweils zwei Längenabschnitte 16 und 17 bzw. 18 und 19 vorgesehen, die unterschiedliche Divergenzwinkel W1 aufweisen. Dabei ist aus Herstellungsgründen vorzugsweise der Längenabschnitt 16 bzw. 18, in welchem sich die Mündung 13 des Faserspeisekanals 14 befindet, als Kegelfläche ausgebildet, wobei hierunter auch eine Kegelstumpffläche verstanden werden soll.

Gemäß den Fig. 2c und 2d ist auch der dem Spinnrotor 2 zugewandte Längenabschnitt 19 der Innenumfangsfläche 12 des Faserführungskörpers 8 als kegelförmige Fläche ausgebildet. Wie bereits erwähnt, läßt sich eine Kegelform besonders einfach, z.B. durch Drehen, herstellen.

Der Übergang von einem Längenabschnitt zum nächsten erfolgt sprunghaft, wenn zwei kegelförmige (bzw. kegelstumpfförmige) Längenabschnitte 18 und 19 aneinander anschließen (siehe Fig. 2c). Soll ein solcher Divergenzsprung vermieden werden, z.B. um einen gleichförmigeren Strömungsverlauf zu erzielen und um somit die Fasern 51 kontinuierlich zu beschleunigen und zu strecken und um auf diese Weise ein optimales Gleiten der Einzelfasern 51 zu erreichen, kann der Übergang zwischen diesen Längenabschnitten 18 und 19 sanfter erfolgen dadurch, daß zwischen diesen beiden kegelförmigen Längenabschnitten 18 und 19 ein weiterer, konvex gekrümmter Längenabschnitt 20 vorgesehen ist.

Während des Spinnbetriebes wird der Auflöse- und Zuführeinrichtung 15 ein Faserband (nicht gezeigt) zugeführt, das zu einzelnen Fasern 51 aufgelöst wird. Da beim Betrieb der beschriebenen Vorrichtung, wie bereits angegeben, Luft aus dem Innenraum des Gehäuses 1 abgesaugt wird, wird aufgrund dieser Absaugung ein Luftstrom erzeugt, der in tangentialer Richtung, jedoch mit einer Abweichung in Richtung Spinnrotor 2, in Umlaufrichtung des Spinnrotors 2 in den Faserführungskörper 8 eintritt. Dabei bekommt der Luftstrom eine schraubenförmige Bewegung, wobei dieser Luftstrom gleichzeitig eine axiale Bewegungskomponente längs der Innenumfangsfläche 12 aufweist. Die Fasern 51 werden von dem erwähnten Luftstrom aufgenommen und so transportiert, daß sie sich im gestreckten Zustand mit einem Ende voraus bewegen. Während der schraubenförmigen Bewegung des Luftstromes beginnen Zentrifugalkräfte auf die Fasern 51 einzuwirken, und die Fasern 51 gelangen in eine Grenzschicht an der Innenumfangsfläche 12. Da diese Innenumfangsfläche 12 in Richtung zum Spinnrotor 2 divergiert, erzeugen die Zentrifugalkräfte eine Axialkraft, die bewirkt, daß sich die Fasern 51 längs der Innenumfangsfläche 12 in Richtung Spinnrotor 2 bewegen. Diese Axialkomponente der Zentrifugalkraft wirkt dabei zuerst auf die voreilenden Enden der Fasern 51 ein, so daß die Fasern 51 während ihres Transportes gespannt und gestreckt werden.

Der die Fasern transportierende Luftstrom bewegt sich dank seiner Führung durch die divergierende Innenumfangsfläche 12 auch in Richtung der Axialkomponente der Zentrifugalkraft, die auf die Fasern 51 wirkt. Auf diese Weise geht die Kontrolle über die Fasern 51 niemals verloren. Es gibt kein unkontrolliertes Schleudern der Fasern 51, und die Fasern 51 bleiben deshalb durch den Luftstrom immer in einem derart vereinzelten Zustand, wie er für die weitere Verarbeitung derselben notwendig ist, und erhalten die geforderte Bewegungsrichtung.

Der die Fasern 51 transportierende Luftstrom befindet sich auch am Austritt aus dem Faserführungskörper 8 in einer Rotationsbewegung, so daß auf die Fasern 51 die Radialkomponente der Zentrifugalkräfte einwirkt. Hierbei wird das vordere Ende jeder Faser 51 am Austritt aus dem Faserführungskörper 8 an die sich mit hoher Geschwindigkeit bewegende Gleitwand 22 des Spinnrotors übergeben, während die Luft durch den Spalt zwischen offenem Rand 9 des Spinnrotors 2 und Faserführungskörper 8 und durch die Luftleitung 4 entweicht. Die Geschwindigkeiten sind so gewählt, daß die Umlaufgeschwindigkeit der Gleitwand 22 des Spinnrotors 2 auf jeden Fall größer ist als die Geschwindigkeit der Fasern 51 in dieser Richtung. Auf diese Weise wird durch die Reibung der Fasern 51 an der Gleitwand 22 das voreilende Ende der Fasern 51 mitgerissen, während das hintere Ende der Fasern 51 durch die Zentrifugalkräfte gegen die Innenumfangswand 12 gepreßt wird. Dies führt zu einer weiteren Streckung der Fasern 51 vor ihrer Ablage im Spinnrotor 2 und ihrem Einbinden in das Ende des Fadens 5.

Die Fasern 51 sind beim Verlassen des Faserführungskörpers 8 über dessen gesamten Umfang verteilt und gelangen auf ein und derselben Höhenlinie - bezogen auf die durch die Fasersammelrille 23 gelegten Ebene - auf die Gleitwand 22 des Spinnrotors 2. Es hat sich gezeigt, daß eine solche Faserablage auf ein und derselben Höhenlinie des Spinnrotors 2 zu besonders guten Ergebnissen hinsichtlich der Garnqualität, z.B. Reißfestigkeit, Elastizität und Gleichmäßigkeit, führt.

Wie die vorstehende Beschreibung zeigt, kann die Vorrichtung im Rahmen der Erfindung in vielfältiger Weise abgewandelt werden, indem beispielsweise einzelne Merkmale durch Äquivalente ersetzt werden oder in anderen Kombinationen Anwendung finden. Es ist auch nicht entscheidend, wie im Einzelfall der die Fasern 51 transportierende Luftstrom erzeugt wird. So kann dieser, wie beschrieben, durch eine Unterdruckquelle oder aber durch den Spinnrotor 2 selber erzeugt werden. Im ersten Fall ist das Gehäuse 1, wie gezeigt, an eine Unterdruckquelle angeschlossen. Die Unterdruckquelle kann die Transportluft aber auch direkt aus dem Spinnrotor 2 abführen, beispielsweise durch den als Hohlschaft ausgebildeten Schaft 7 des Spinnrotors 2 oder durch einen durch den Rotordeckel 3 bis in den Spinnrotor 2 (durch den Faserführungskörper 8 hindurch) ragenden Saugkanal. Im zweiten Fall sind im Spinnrotor 2 kreisförmig verteilte Ventilationsöffnungen vorgesehen, die aufgrund der Rotation des Spinnrotors 2 in diesem einen Unterdruck erzeugen. Wesentlich für beide Fälle ist jedoch, daß dieser Luftstrom durch den Faserführungskörper 8 hindurch dem Inneren des Spinnrotors 2 zugeführt wird.

Wenn der Spinnrotor 2 Ventilationsöffnungen aufweist und den Spinnunterdruck aufgrund seiner Drehung selber erzeugt, so kann auch vorgesehen werden, daß durch den Spalt zwischen Faserführungskörper 8 und Spinnrotor 2 Luft in das Innere des Spinnrotors 2 eindringt. Wenn der Spinnrotor 2 in einem geschlossenen Gehäuse (nicht gezeigt) angeordnet ist, so kann die in den Spinnrotor 2 durch den Spalt eingeführte Luft die Luft sein, die zuvor aufgrund der Rotation den Spinnrotor 2 durch dessen Ventilationsöffnungen verlassen hat. Wenn die vom Gehäuse umschlossene Kammer unterteilt ist, so kann alternativ vorgesehen werden, daß der den Spinnrotor 2 durch die Ventilationsöffnungen verlassende Luftstrom durch eine erste Kammer aus dem Gehäuse abgeführt wird, während ein anderer Luftstrom durch eine zweite Kammer und den Spalt in den Spinnrotor 2 eingeführt wird. Auf jeden Fall muß dafür Sorge getragen werden, daß die durch den Faserführungskörper 8 zusätzlich dem Spinnrotor 2 zugeführte Luft aus diesem wieder abgeführt wird. Zumindest dann, wenn die den Spinnrotor 2 durch die Ventilationsöffnungen verlassende Luft durch den Spalt wieder in den Spinnrotor 2 gelangt, muß eine zusätzliche Absaugung vorgesehen werden. Diese kann beispielsweise an den als Hohlschaft ausgebildeten Schaft 7 des Spinnrotors 2 angeschlossen sein, wobei dann das Fadenabzugsrohr 6 vorzugsweise durch den Innenraum des Faserführungskörpers 8 bis in den Spinnrotor 2 ragt.

Bei der gezeigten Ausführungsform übergreift der Faserführungskörper 8 den Spinnrotor 2 nach innen. Wenn durch den Spalt zwischen Spinnrotor 2 und Faserführungskörper 8 Luft in das Rotorinnere geführt wird, kann u.U. auf das Übergreifen des Faserführungskörpers 8 verzichtet werden, da durch die in den Spinnrotor 2 einfließende Luft ein Faserverlust vermieden wird. Durch die relative Anordnung von Austrittsöffnung 10 des Faserführungskörpers 10 und offenem Rand 9 des Spinnrotors 2 kann die Orientierung der in den Spinnrotor 2 einströmenden Luft und damit die Ablage der Einzelfasern 51 auf der Gleitwand 22 des Spinnrotors 2 beeinflußt werden.

Es ist nicht unbedingt erforderlich, den Schaft 7 des Spinnrotors 2 hohl auszubilden, da das Fadenabzugsrohr 6 abweichend vom gezeigten Ausführungsbeispiel auch durch den Rotordeckel 3 (und den Faserführungskörper 8) hindurch geführt werden kann.

Wenn sich im Faserführungskörper 8 ein Saugkanal (nicht gezeigt) oder das Fadenabzugsrohr 6 befindet, so kann dieser Saugkanal oder dieses Fadenabzugsrohr 6 in einem Körper (nicht gezeigt) angeordnet sein, der weitgehend der Innenkontur des Fadenführungskörpers 8 angepaßt ist.

Gemäß der in Fig. 1 gezeigten Ausführung der beschriebenen Vorrichtung ist vorgesehen, daß der Faserführungskörper 8 integrierter Teil des Rotordeckels 3 ist. Dies ergibt eine besonders kostengünstige Fertigung. Sind aber zur Anpassung an verschiedene Spinnbedingungen unterschiedliche Faserführungskörper 8 wahlweise zum Einsatz zu bringen, so kann es von Vorteil sein, daß der Faserführungskörper 8 auswechselbar am Rotordeckel 3 befestigt wird. Hierbei sind natürlich wiederum unterschiedliche konstruktive Ausgestaltungen möglich je nach Form des Rotordeckels 3 etc. So kann der Faserführungskörper 8 auf die dem Spinnrotor 2 zugewandte Seite des Rotordeckels 3 aufgesetzt sein. Wenn der Faserführungskörper 8 eine größere axiale Ausdehnung hat, so kann der Rotordeckel 3 alternativ eine Ausnehmung aufweisen, in die der Faserführungskörper 8 eingesetzt wird. Auf diese Wiese läßt sich der Faserführungskörper 8 einfach und unabhängig vom Rotordeckel 3 auswechseln gegen einen solchen Faserführungskörper 8 , der in spezieller Weise dem zum Einsatz kommenden Spinnrotor 2 angepaßt ist. Auch läßt sich der Faserführungskörper 8 auswechseln, wenn dies aus Verschleißgründen notwendig wird, ohne daß der Rotordeckel 3 mit ausgetauscht werden muß.

Wenn, wie dies die Fig. 2b) bis 2d) zeigen, der Faserführungskörper 8 mehrere Längenabschnitte 16 und 17 bzw. 18 und 19 oder aber 18, 20 und 19 aufweist, so muß ein solcher Austausch nicht unbedingt den kompletten Faserführungskörper 8 betreffen. Je nach dem Grund für den Austausch kann es genügen, wenn allein der dem Spinnrotor 2 zugewandte Längenabschnitt 17 oder 19 ausgewechselt wird, während der dem Spinnrotor 2 abgewandte Längenabschnitt 16 bzw. 18 von dieser Auswechslung ausgenommen wird. Bei einem Faserführungskörper 8 mit drei oder mehr Längenabschnitten kann der mittlere Längenabschnitt 20 oder können die mittleren Längenabschnitte mit ausgetauscht werden, wenn dies zweckmäßig sein sollte. Entsprechend ist dann der Faserführungskörper 8 in mindestens zwei Teile zu unterteilen, von denen der eine zumindest den Längenabschnitt 16 bzw. 18 mit der Mündung 13 des Faserführungskörpers 8 aufnimmt und vom Austausch ausgeschlossen werden kann (aber nicht zu sein braucht), während der andere zumindest den Längenabschnitt 17 bzw. 19 umfaßt und abnehmbar und austauschbar ist.

Eine solche Teilaustauschbarkeit des Faserführungskörpers 8 ist insbesondere dann von Vorteil, wenn Spinnrotoren 2 mit unterschiedlichem Durchmesser zum Einsatz kommen. Um nicht den Abstand oder die Positionen der Auflöse- und Zuführeinrichtung 15 gegenüber dem Spinnrotor 2 (oder umgekehrt) ändern zu müssen, wird vorgesehen, daß der Längenabschnitt 16 bzw. 18 des Faserführungskörpers 8 unabhängig von der Ausbildung oder Größe des Spinnrotors 2 gleich bleibt. Damit sind die geometrischen Verhältnisse zwischen Auflöse- und Zuführeinrichtung 15 und Faserspeisekanal 14 ebenfalls unverändert. Zur Anpassung an eine abgewandelte Rotorform oder -größe wird ein Längenabschnitt 17 bzw. 19 (und eventuell ein diesem vorgeschalteter Längenabschnitt 20 oder mehrere derartige zwischengeschaltete Längenabschnitte) mit entsprechend abgeändertem Divergenzwinkel W1 eingetauscht, so daß der Faserführungskörper 8 in jedem Fall in unmittelbarer Nähe der Gleitwand 22 des Spinnrotors 2 endet.

## Patentansprüche

1. Vorrichtung zum Zuführen von Fasern (51) zu der Fasersammelrille eines Offenend-Spinnrotors (2), mit einem koaxial in den Spinnrotor hineinragenden, feststehenden Faserführungskörper (8), der eine als Faserführungsfläche ausgebildete Innenumfangsfläche (12) aufweist, in welche tangential die Mündung (13) eines Faserspeisekanals (14) einmündet und übergeht, dadurch gekennzeichnet, daß der Spinnrotor (2) durch einen Rotordeckel (3) abgedeckt wird, dessen dem Spinnrotor (2) zugewandte Seite den Faserführungskörper (8) aufnimmt und dessen Innenumfangsfläche (12) einen sich in Richtung Spinnrotor (2) öffnenden Divergenzwinkel (W1) einschließt.

2. Vorrichtung nach Anspruch 1, dadurch gekennzeichnet, daß der Faserführungskörper (8) einen integrierten Bestandteil des Rotordeckels (3) bildet.

3. Vorrichtung nach Anspruch 1 oder 2, dadurch gekennzeichnet, daß die Innenumfangsfläche (12) des Faserführungskörpers (8) sich kegelförmig in Richtung Spinnrotor (2) erweitert.

4. Vorrichtung nach einem der Ansprüche 1 bis 3, dadurch gekennzeichnet, daß der Divergenzwinkel (W1) von der Mündung (13) des Faserspeisekanals (14) in Richtung zum Spinnrotor (2) zunimmt.

5. Vorrichtung nach Anspruch 4, dadurch gekennzeichnet, daß die Vergrößerung des Divergenzwinkels (W1) kontinuierlich erfolgt.

6. Vorrichtung nach Anspruch 5, dadurch gekennzeichnet, daß die Innenumfangsfläche (12) des Faserführungskörpers (8) gleichförmig konvex gewölbt ist.

7. Vorrichtung nach Anspruch 4, dadurch gekennzeichnet, daß die Vergrößerung des Divergenzwinkels (W1) diskontinuierlich erfolgt.

8. Vorrichtung nach Anspruch 7, dadurch gekennzeichnet, daß die Innenumfangsfläche (12) des Faserführungskörpers (8) in axialer Richtung aus mindestens zwei Längenabschnitten (16, 17; 18, 19; 18, 20, 19) zusammmengesetzt ist, die unterschiedliche Divergenzwinkel (W1) aufweisen.

9. Vorrichtung nach Anspruch 8, dadurch gekennzeichnet, daß der Längenabschnitt (16, 18), in welcher der Faserspeisekanal (14) mündet, als Kegelfläche ausgebildet ist.

10. Vorrichtung nach Anspruch 9, dadurch gekennzeichnet, daß der dem Spinnrotor (2) zugewandte Längenabschnitt (17, 18) als Kegelfläche ausgebildet ist.

11. Vorrichtung nach den Ansprüchen 9 und 10, dadurch gekennzeichnet, daß zwischen zwei kegelförmigen Längenabschnitten (18, 19) der Innenumfangsfläche (12) des Faserführungskörpers (8) ein weiterer, konvex gekrümmter Längenabschnitt (20) vorgesehen ist.

12. Vorrichtung nach einem oder mehreren der Ansprüche 8 bis 11, dadurch gekennzeichnet, daß der dem Spinnrotor (2) zugewandte Längenabschnitt (17, 19) des Faserführungskörpers (8) auswechselbar ist.

13. Vorrichtung nach einem oder mehreren der Ansprüche 1 bis 12, dadurch gekennzeichnet, daß der Faserführungskörper (8) in den Spinnrotor (2) hineinragt.

## Claims

1. A device for supplying fibres (51) to the fibre-collecting groove of an open-end spinning rotor (2), with a stationary fibre-guide member (8) projecting coaxially into the spinning rotor and comprising an internal peripheral face (12) which is constructed as a fibre-guide face and into which the opening (13) of a fibre-feed duct (14) opens tangentially and into which it passes, **characterized in that** the spinning rotor (2) is covered by a rotor cover (3), of which the side facing the spinning rotor (2) receives the fibre-guide member (8) and of which the internal peripheral face (12) forms an angle of divergence **(W1)** which opens in the direction of the spinning rotor (2).

2. A device according to Claim 1, **characterized in that** the fibre-guide member (8) forms an integral component of the rotor cover (3).

3. A device according to Claim 1 or 2, **characterized in that** the internal peripheral face (12) of the fibre-guide member (8) is enlarged in a conical manner in the direction of the spinning rotor (2).

4. A device according to one of Claims 1 to 3, **characterized in that** the angle of divergence **(W1)** increases from the opening (13) of the fibre-feed duct (14) in the direction of the spinning rotor (2).

5. A device according to Claim 4, **characterized in that** the angle of divergence **(W1)** increases in a continuous manner.

6. A device according to Claim 5, **characterized in that** the internal peripheral face (12) of the fibre-guide member (8) bulges in a uniformly convex manner.

7. A device according to Claim 4, **characterized in that** the angle of divergence **(W1)** increases in a discontinuous manner.

8. A device according to Claim 7, **characterized in that** the internal peripheral face (12) of the fibre-guide member (8) is formed in the axial direction by at least two longitudinal portions (16, 17; 18, 19; 18, 20, 19) which have different angles of divergence **(W1)**.

9. A device according to Claim 8, **characterized in that** the longitudinal portion (16, 18), into which the fibre-feed duct (14) opens, is constructed as a conical face.

10. A device according to Claim 9, **characterized in that** the longitudinal portion (17, 18) facing the spinning rotor (2) is constructed as a conical face.

11. A device according to Claims 9 and 10, **characterized in that** a further longitudinal portion (20) curved in a convex manner is provided between two conical longitudinal portions (18, 19) of the internal peripheral face (12) of the fibre-guide member (8).

12. A device according to one or more of Claims 8 to 11, **characterized in that** the longitudinal portion (17, 19) of the fibre-guide member (8) facing the spinning rotor (2) is interchangeable.

13. A device according to one or more of Claims 1 to 12, **characterized in that** the fibre-guide member (8) projects into the spinning rotor (2).

## Revendications

1. Dispositif permettant d'amener des fibres (51) jusqu'à la rainure collectrice de fibres d'un rotor de filage (2) à fibres libérées, comportant un corps fixe (8) guidant les fibres et s'étendant de façon coaxiale dans le rotor de filage qui présente une surface circonférentielle intérieure (12) conçue comme surface de guidage des fibres dans laquelle débouche et passe de façon tangentielle l'ouverture (13) d'un canal (14) d'alimentation de fibres, caractérisé en ce que le rotor de filage (2) est recouvert d'un couvercle (3) de rotor dont la face orientée vers le rotor (2) de filage loge le corps (8) de guidage des fibres et dont la surface circonférentielle intérieure (12) renferme un angle de divergence (W1) qui s'ouvre en direction vers le rotor (2) de filage.

2. Dispositif selon la revendication 1, caractérisé en ce que le corps (8) de guidage des fibres fait partie intégrante du couvercle (3) de rotor.

3. Dispositif selon la revendication 1 ou 2, caractérisé en ce que la surface circonférentielle intérieure (12) du corps (8) de guidage des fibres s'étend de façon conique vers le rotor de filage (2).

4. Dispositif selon l'une des revendications 1 à 3, caractérisé en ce que l'angle de divergence (W1) augmente depuis l'ouverture (13) du canal (14) d'alimentation des fibres en direction vers le rotor de filage (2).

5. Dispositif selon la revendication 4, caractérisé en ce que l'augmentation de l'angle de divergence (W1) se fait de façon continue.

6. Dispositif selon la revendication 5, caractérisé en ce que la surface circonférentielle intérieure (12) du corps (8) de guidage des fibres présente une forme convexe uniforme.

7. Dispositif selon la revendication 4, caractérisé en ce que l'aumentation de l'angle de divergence (W1) se fait de façon discontinue.

8. Dispositif selon la revendication 7, caractérisé en ce que la surface circonférentielle intérieure (12) du corps (8) de guidage des fibres est composée, en sens axial, d'au moins deux segments longitudinaux (16, 17,18, 19; 18, 20, 19) qui présentent des angles de divergence (W1) différents.

9. Dispositif selon la revendication 8, caractérisé en ce que le segment longitudinal (16, 18) dans lequel débouche le canal (14) d'alimentation de fibres est conçu comme cône.

10. Dispositif selon la revendication 9, caractérisé en ce que le segment longitudinal (17, 18) orienté vers le rotor de filage (2) est conçu comme cône.

11. Dispositif selon les revendications 9 et 10, caractérisé en ce qu'entre deux segments longitudinaux coniques (18, 19) de la surface circonférentielle intérieure (12) du corps (8) de guidage des fibres, il est prévu un segment longitudinal supplémentaire (20) qui présente und forme courbe convexe.

12. Dispositif selon l'une ou plusieurs des revendications 8 à 11, caractérisé en ce que le segment longitudinal (17, 19) du corps (8) de guidage des fibres orienté vers le rotor de filage (2) est échangeable.

13. Dispositif selon l'une ou plusieurs des revendications 1 à 12, caractérisé en ce que le corps (8) de guidage des fibres s'étend jusque dans le rotor de filage (2).
